# EUROPEAN PATENT APPLICATION

(11) **EP 4 335 619 A1**
(43) Date of publication of application: **13.03.2024**
(21) Application number: 22194636.1
(22) Date of filing: 08.09.2022
(51) Int. Cl.: B29C 49/48, B29C 49/06, B29C 33/30, B29C 33/04, B29C 33/00, B29K 67/00, B29L 31/00

(54) **ADAPTER FOR ATTACHING A MOLD BOTTOM TO AN INCOMPATIBLE MOLD SUPPORT**

(71) Applicant: Competek, 16130 Salles-d'Angles (FR)
(72) Inventor: ZANARDO, Igor, 16130 Salles-d'Angles (FR); DACQUIGNIE, Olivier, 16130 Salles-d'Angles (FR)
(74) Representative: Sidel Group

(57) **Abstract**

The invention relates to means for mounting a mold bottom (16) used for forming containers of thermoplastic material, in particular by stretch blow molding, from a preform on a mold support (24) of a molding unit (10), the mold bottom (16) being located at a lower vertical end of a mold (12),
characterized in that the mounting means comprise an adapter (29) to be axially interposed between the mold support (24) below and the mold bottom (16) above, the adapter (29) comprising:
- first fastening means (26B) for quick release attachment of the adapter (29) to the mold support (24); and
- second fastening means (28B) for the quick-release attachment of the mold bottom (16) to the adapter (29).

## Description

### Technical field of the invention

The invention relates to means for mounting a mold bottom, used for forming containers from a preform of thermoplastic material, in particular by stretch blow-molding, on a mold support of a molding unit, the mold bottom being located at a lower vertical end of a mold.

### Technical background

It is known that containers, in particular bottles, made of thermoplastics, in particular PET (polyethylene terephthalate), can be mass produced by blow molding or stretch blow molding preforms. For this purpose, the hot preforms are inserted into a mold with a mold cavity in the shape of the container to be produced.

In order to mass produce the containers, several molding units are arranged on a main wheel forming a rotating carousel of a forming station. This makes it possible to form several containers one after the other as they move between an entry point and an exit point.

In the manufacturing phase, the preforms are fed to a molding unit of the forming installation, which is associated with means for applying at least one pressurized fluid to the preform. The preform is formed, for example, by stretching and blowing with a pressurized gas, such as air.

In a forming station comprising a rotary carousel, each molding unit comprises at least one mold equipped with a mold cavity. The mold is made up of at least two mold halves and a mold bottom, each of which carries a part of the cavity. The mold halves are -carried by two associated mold carriers while the mold bottom is mounted on a mold support.

Container manufacturers often have to change the model of the containers produced. In order to allow for this change of model, it is known to design molding units that allow for easy and quick replacement of the mold elements with the cavity.

For this purpose, the mold support is provided with first fastening means and the mold bottom is provided with second fastening means, the second fastening means being complementary to the first fastening means to allow the quick mounting and dismounting of the mold bottom on the mold support.

It may happen that a manufacturer modifies the first fastening means carried by the mold support when a new version of forming installation is released. In this case, the first fastening means carried by the mold support are no longer complementary to the second fastening means carried by the currently used mold bottoms. In other words, the mold bottoms are no longer compatibles with the mold carriers of the new installation.

If the user of such a system wishes to acquire the new system, he is in the obligation to renew all the molds he has been using until now, even if these molds are still in good condition.

There is therefore a need to make the use of the molds independent of the fastening means carried by the mold support. This is particularly cost effective.

### Summary of the invention

The invention proposes means for mounting a mold bottom used for forming a container of thermoplastic material, in particular by stretch blow molding, from a preform, on a mold support of a molding unit, the mold bottom being located at a lower vertical end of a mold.

The invention is characterized in that the mounting means comprise an adapter to be axially interposed between the mold support -below and the mold bottom -above, the adapter comprising:
- first fastening means for quick release attachment of the adapter to the mold support; and
- second fastening means for the quick-release attachment of the mold bottom to the adapter.

According to another aspect of the invention, the first fastening means of the adapter are not complementary to the second fastening means of the adapter.

According to another aspect of the invention, the first fastening means are axial interlocking fastening means performed solely by an axial sliding movement of the adapter relative to the mold support.

According to another aspect of the invention, the first fastening means comprises at least one stud extending axially downwardly from a body of the adapter and intended to be axially engaged in a complementary hole of the mold support, the stud comprising at least one recess for radially receiving a locking element in a mounted position on the mold support.

According to another aspect of the invention, the second fastening means are means for fastening by a combination of a pivoting movement of the second fastening means relative to the mold bottom and an axial sliding movement of the mold bottom relative to the adapter.

According to another aspect of the invention, the second fastening means comprise a fastening ring, the fastening ring being pivotally mounted on a body of the adapter between an angular position for mounting the mold bottom and an angular position for dismounting the mold bottom, the fastening ring being mounted axially stationary relative to the body of the adapter.

According to another aspect of the invention, the second fastening means comprise grooves intended to cooperate with complementary lugs of the mold bottom for fastening the mold bottom according to a pivoting movement of the mold bottom relative to the second fastening means.

According to another aspect of the invention, the adapter comprises stop faces intended to limit the pivoting of the fastening ring between its angular mounting position and its angular removal position.

According to another aspect of the invention, the second fixing means comprise a member for locking the fastening ring in the angular mounting position.

According to another aspect of the invention, the adapter comprises at least one fluidic duct comprising at least one lower end port which is intended to be connected with a line of the mold support, and an upper end port which is intended to be connected with a tempering duct of the mold bottom.

According to another aspect of the invention, the adapter comprises at least a first connector which is arranged at the lower end of the fluidic duct and which is intended to be sealingly connected with a complementary connector of the mold support.

According to another aspect of the invention, the first connector is configured to automatically connect with the complementary connector of the mold support by vertical mating.

According to another aspect of the invention, the adapter comprises a second connector which is arranged at the upper end port of the fluidic duct and which is intended to be sealingly connected with a complementary connector of the mold bottom.

According to another aspect of the invention, the second connector is configured to automatically connect with the complementary connector of the mold bottom by vertical mating.

The invention also concerns a moulding unit for the biaxial forming of a container from a preform of thermoplastic material, in particular by stretch blow molding, the molding unit comprising:
- a multi-part mold with a mold bottom, one upper side of which is provided with a cavity in the shape of the container base;
- a mold support on which the mold bottom is fixedly mounted;
- the mold bottom having second fastening means for attachment to the mold support;
- the mold support comprising first fastening means for fixing the mold bottom which are not complementary to the second fixing means of the mold bottom.

The molding unit is characterized in that it comprises an adapter made according to the invention which is interposed between the mold bottom and the mold support to allow the mold bottom to be fixed to the mold support, the first fastening means of the adapter being complementary to the first fastening means of the mold support and the second fastening means of the adapter being complementary to the second fastening means of the mold bottom.

### Brief description of the figures

Further features and advantages of the invention will become apparent from the following detailed description, for the understanding of which reference is made to the attached drawings.
Figure 1 is a perspective view showing a molding unit equipped with the means for mounting a mold according to the invention.
Figure 2 is an exploded perspective view showing a mold able to be used with the moulding unit of figure 1.
Figure 3 is a cross-sectional view along an axial section plane of the moulding unit of figure 1 showing schematically the mold bottom mounted on a mold support by an adapter realized according to the invention.
Figure 4 is a perspective view showing a first embodiment of the adapter according to the invention.
Figure 5 is a perspective view showing a second embodiment of the adapter according to the invention.
Figure 6 is a perspective view showing the mold bottom of figure 3 configured to be attached to the adapter.
Figure 7 is perspective view from above showing the adapter of figure 4.
Figure 8 is a cross-sectional view along the axial section plane 8-8 of figure 7 showing the adapter.

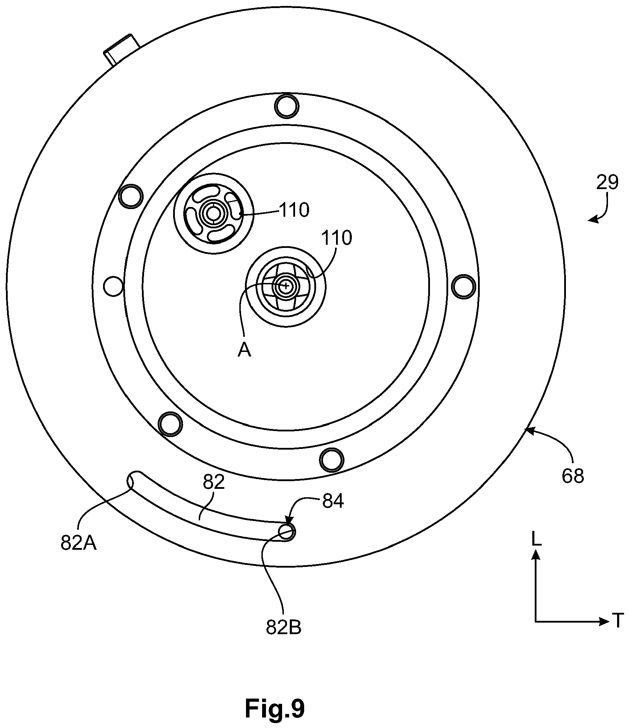

Figure 9 is a cross-sectional view along the plane 9-9 of figure 8 showing the adapter.
Figure 10 is a cross-sectional view similar to the view of figure 7 showing the adapter according to the first embodiment and the mold bottom in a dismounted position.
Figure 11 is a cross-sectional view similar to the view of figure 11 showing the adapter according to the first embodiment and the mold bottom in a mounted position.

### Detailed description of the invention

In the following description, elements with identical structure or similar functions will be referred to by the same reference.

In the remainder of the description, we will adopt, in a non-limitating way, longitudinal orientations directed from back to front, vertical orientations directed from bottom to top, and transverse orientations directed from left to right, which are indicated by the trihedron "L,V,T" in the figures. These orientations are related to the fixed support of the molding unit 10, the longitudinal direction being tangential to the trajectory of the molding unit during the rotation of the carousel. The vertical direction "V" is used as a geometrical reference without relation to the direction of the earth gravity.

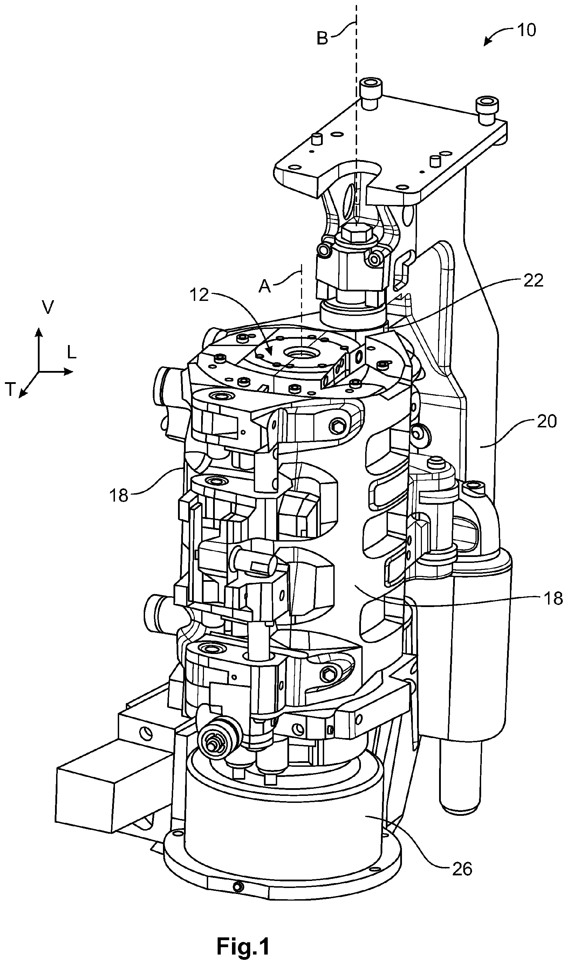

Figure 1 shows a molding unit 10 for the forming in mass production of containers made of thermoplastic material by blow molding, in particular by stretch blow molding, of a preheated preform. The final container is, for example, a bottle.

Such a molding unit 10 is part of a blow molding machine which generally comprises several identical molding units distributed around the periphery of a carousel (not shown). The molding unit 10 can thus be moved along a circular path relative to the floor on which the blowing machine is placed.

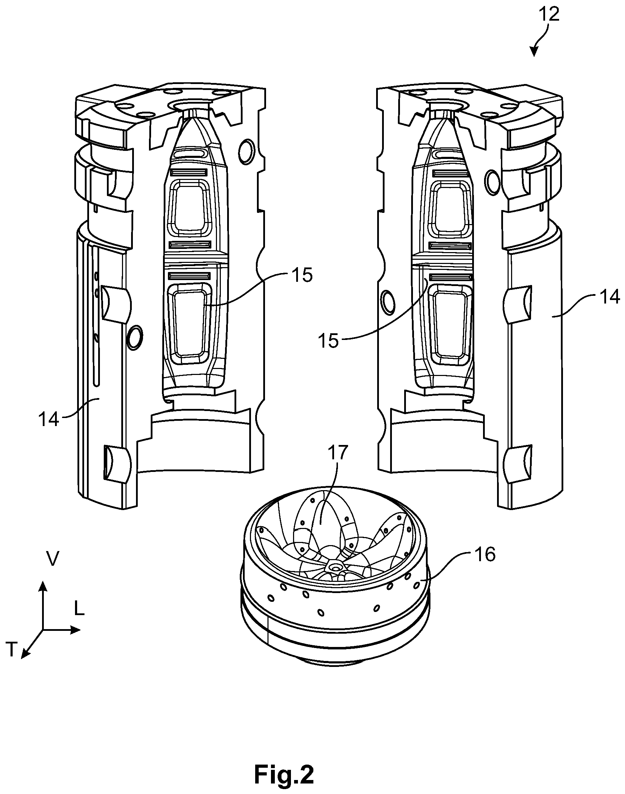

The molding unit 10 includes a mold 12. As shown in more detail in Figure 2, the mold 12 comprises, in a known manner:
- two half-molds 14, sometimes called "shells", which carry a part 15 of the cavity in the shape a body of the container of vertical axis "A" to be obtained; and
- a mold bottom 16 which carries a part 17 of the cavity in the shape of the base of said container.

The mold bottom 16 has a generally cylindrical shape with an axis coaxial to the "A" axis of the container to be obtained.

The mold bottom 16 and the half-molds 14 can be changed according to the shape of the final container to be obtained.

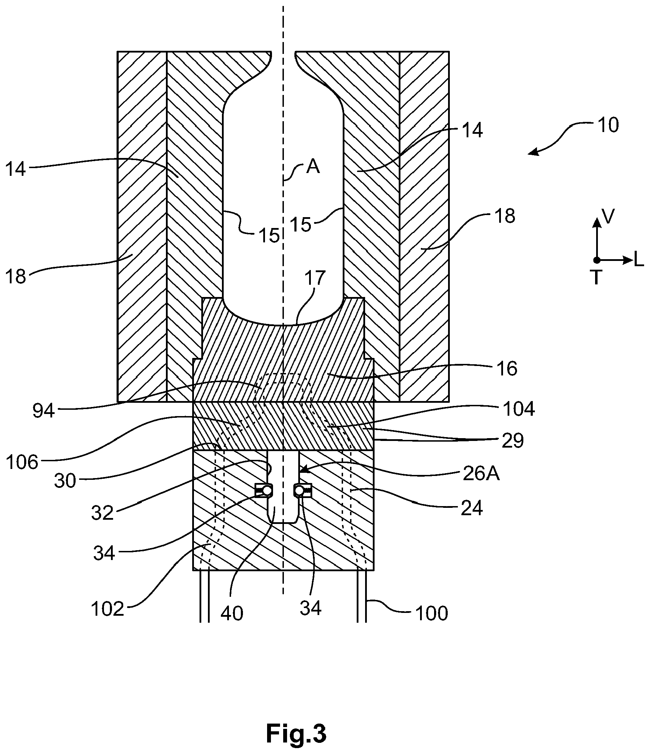

The half-molds 14 are generally removably secured in mold carriers 18, shown for example in Figure 3. Each mold carrier 18 is carried by a frame 20, or bracket, shown in Figure 1. The frame 20 is intended to be carried by the carousel.

The mold holders 18 are pivotally mounted on the frame 20 by means of a common lateral hinge 22 with a vertical "B" axis. The two half-molds 14 are thus longitudinally movable between a separated position for extracting the finished container and a joined position for molding the container, as shown in Figure 3.

Referring to Figure 3, the mold bottom 16 is fixedly mounted on a mold support 24. The mold support 24 and the mold bottom 16 thus form an integral unit.

The mold support 24 is mounted vertically slidable with respect to the frame 20 of the molding unit 10 between:
- a lower finished container extraction position (not shown) in which the mold bottom 16 is positioned below the cavity 15 of the half-molds 14; and
- an upper container base molding position, as shown in Figure 3, in which the mold bottom 16 is positioned between the mold halves 14 so as to complete the final container cavity 15.

In order to allow the change of the mold bottom 16, the upper end of the mold support 24 comprises first fastening means 26A which are intended to allow the quick fastening of the mold bottom 16 on the mold support 24. These are quick-release fastening means 26A that generally require a single movement to allow disassembly, unlike the use of several screws that require numerous operations.

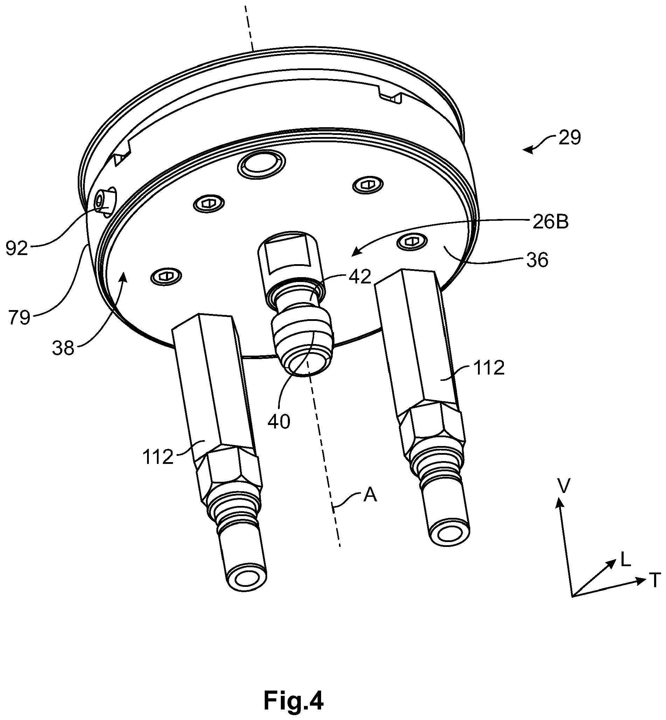

As shown in Figure 4, the mold bottom 16 has at its lower end second means 28A for attachment to the mold support 24, which are intended to allow the mold bottom 16 to be quickly attached to the mold support 24. These are also quick-release fastening means 28A.

However, the second means 28A for securing the mold bottom 16 are not complementary to the first means 26A for securing the mold support 24. Therefore, it is not possible to mount the mold bottom 16 directly on the mold support 24.

The invention proposes to solve this problem by vertically interposing an adapter 29 between the mold support 24 and the mold bottom 16. The adapter 29 is a separate element from the mold bottom 16 and the mold support 24. To this end, the adapter 29 comprises:
- first fastening means 26B for quick-release attachment of the adapter 29 to the mold support 24, which are complementary to the first means 26A for attachment of the mold support 24; and
- second fastening means 28B for quick-release attachment of the mold bottom 16 to the adapter 29, which are complementary to the second means 28A for attachment of the mold bottom 16.

In the example shown in the figures, the first fastening means 26A of the mold support 24 are means by interlocking along a vertical axis. The first fastening means 26A of the mold support 24 includes an upper horizontal support face 30 which is intended to support the weight of the mold bottom 16.

This support face 30 includes a fastening hole 32 having a vertical axis. The fastening hole 32 is here arranged coaxially with the axis "A" of the mold bottom 16.

The first fastening means 26A of the mold support 24 further includes at least one locking element 34 that is movable between a locking position in which it extends radially across the fastening hole 32 and a release position in which it is retracted away from the fastening hole 32. Each locking member 34 is here movable radially with respect to the axis "A" of the fastening hole 32.

Alternatively, not shown, the locking member can be movably mounted according to other types of mechanical connections, for example it is pivotally mounted around a vertical axis.

As a non-limiting example, the first fastening means 26A of the mold support 24 comprises several locking elements 34 which are here formed by balls.

An adapter 29 made according to a first embodiment of the invention is shown in Figure 4. The adapter 29 has a generally cylindrical shape, the axis of which is intended to be coaxial with the axis "A" of the bottom after the mold bottom 16 is mounted on the adapter 29.

The first fastening means 26B of the adapter 29 for fastening the adapter 29 to the mold support 24 are means for fastening by interlocking in the direction of the "A" axis. More particularly, the fastening is achieved solely by an axial sliding movement of the adapter 29 with respect to the mold support 24.

The first fastening means 26B of the adapter 29 to attach the adapter 29 to the mold support 24 comprises a lower horizontal bearing face 36 which is arranged under a body 38 of the adapter 29. The lower horizontal bearing face 36 is intended to rest flat, vertically downward, on the support face 30 of the mold support 24. The bearing face 36 here has a shape complementary to that of the support face 30.

At least one stud 40 extends axially downwardly from the bearing face 36. In the example shown in Figure 4, the adapter 29 includes a single stud 40 that is arranged coaxially with the "A" axis. The stud 40 is intended to be axially fitted into the fastening hole 32 for fixing the mold support 24. For this purpose, the stud 40 has a shape complementary to that of the fastening hole 32.

Thus, in a position mounted on the mold support 24, the adapter 29 rests on the support face 30 via its bearing face 36, with the stud 40 inserted vertically into the fastening hole 32.

To enable the adapter 29 to be locked in a mounted position on the mold support 24, the stud 40 has at least one recess 42 that is arranged to radially receive each locking element 34. Here, the recess 42 is in the form of a groove surrounding an intermediate section of the stud 40.

The locking elements 34 can be actuated automatically by a motor or by a cylinder, semi-automatically by elastic return means or manually by actuating a control (not shown) mounted on the mold support 24.

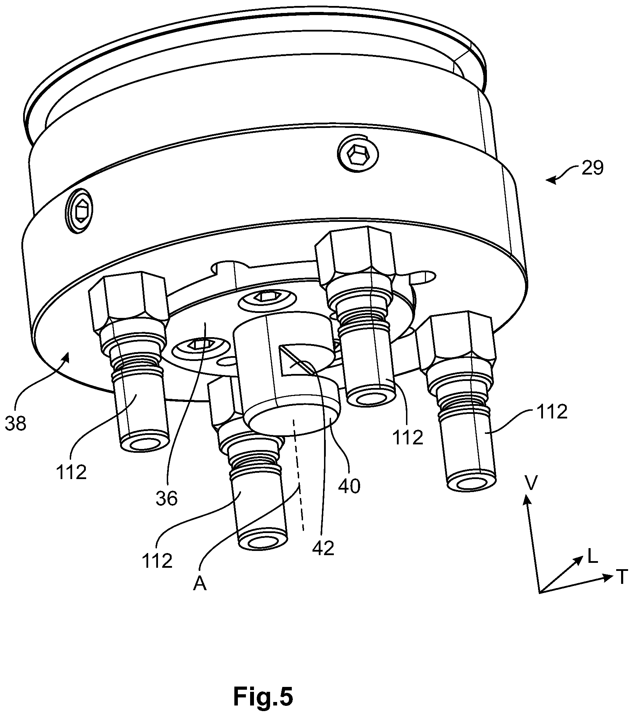

According to an alternative embodiment shown in Figure 5, the stud 40 has a larger diameter than the stud 40 of Figure 4. The housing 42 is formed here by a transverse notch whose bottom forms a flat.

Of course, the shape and number of studs may vary depending on the configuration of the first means 26A for attaching the mold support 24.

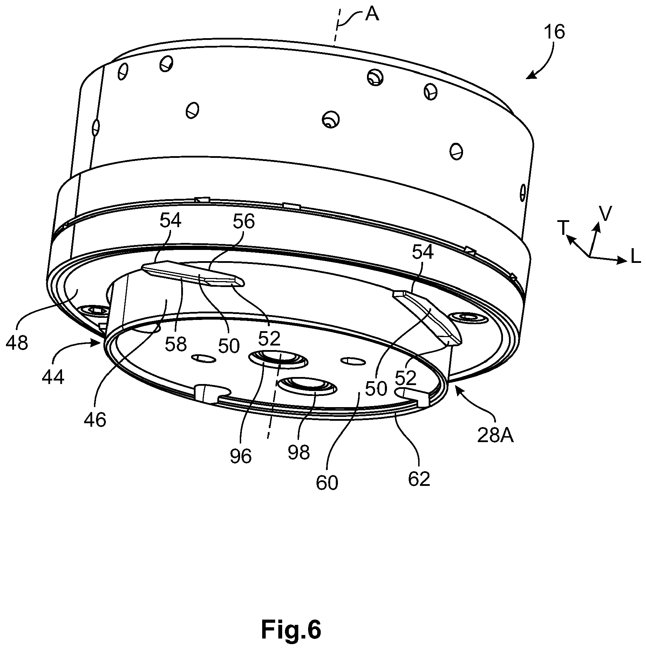

As shown in Figure 6, the second fastening means 28A of the mold bottom 26 for attaching the bottom mold 16 to the adapter 29 are means combining a pivoting movement about the axis "A" of the mold bottom 16 with a sliding movement along the axis "A" of the mold bottom 16.

In the embodiment shown in the figures, the pivoting motion is a motion of approximately a quarter turn.

In the example shown in Figure 6, the second fastening means 28A of the mold bottom 26 includes a lower end section 44 that is radially bounded by a cylindrical face 46 coaxial with the axis "A". The lower end section 44 extends from a lower shoulder 48 of the mold bottom 16.

The cylindrical face 46 includes a plurality of radially projecting lugs 50. The lugs 50 are evenly distributed around the cylindrical face 46. There are here four lugs 50.

The lugs 50 have the shape of a section of a helical thread. Each lug 50 is vertically delimited by a free lower end 52 and by an upper end 54 arranged at the level of the shoulder 48. The lower end 52 is connected to the upper end 54 by an upper helical face 56 and by an opposite lower helical face 58.

The helical shape of the lugs 50 thus makes it possible to fix the mold bottom 16 to the adapter 29 by a screwing movement, thus combining simultaneously the pivoting movement and the axial sliding movement.

The lower end section 44 is delimited downwardly by a circular lower face 60 which is intended to bear vertically against the body 38 of the adapter when the mold bottom 16 is in the mounted position on the adapter 29. The lower face 60 is here delimited radially by a vertical annular bead 62.

In a variant of the invention not shown, the lugs are designed to allow bayonet fixing to the adapter. In this case, when mounting the mold base on the adapter, the mounting is carried out successively by the sliding movement and then by the pivoting movement which allows the mold bottom to be fixed and clamped against the adapter.

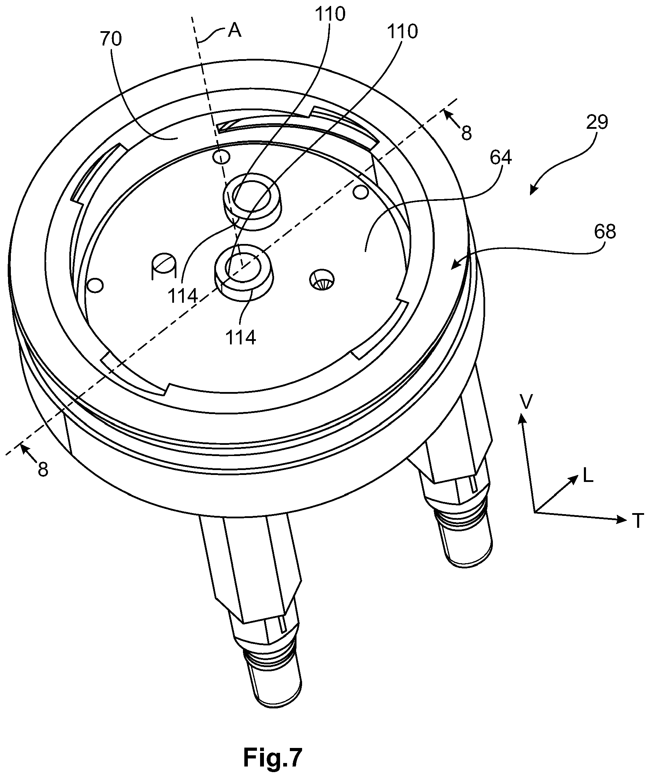

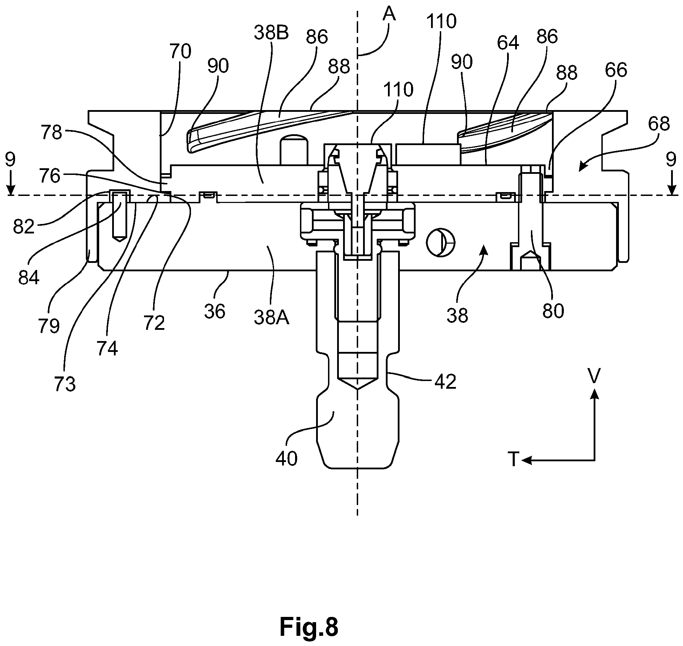

As shown in Figures 7 and 8, the second fastening means 28B of the adapter 29 for the quick-release attachment of the mold bottom 16 to the adapter 29 comprise an upper carrier face 64 belonging to the body 38 and against which the lower face 60 of the mold bottom 16 is intended to bear flat in the mounted position.

The carrier face 64 is radially delimited by a circular groove 66 intended to receive the bead 62 of the mold bottom 16.

The second fastening means 28B further comprise a fastening ring 68 coaxial to the axis "A". The fastening ring 68 has an internal cylindrical face 70 complementary in shape to the cylindrical face 46 of the mold bottom 16.

The fastening ring 68 is pivotally mounted about the axis "A" on the adapter body 38 between an angular mounting position and an angular removal position. The fastening ring 68 is further mounted vertically fixed with respect to the body 38 of the adapter 29.

To permit pivotal mounting of the fastening ring 68, the body 38 is hereby formed into a lower portion 38A, which includes the lower bearing face 36, and an upper portion 38B, which includes the carrier face 64. The fastening ring 68 includes an inner annular flange 72 that projects radially inwardly from a lower end of the inner cylindrical face 70.

The lower portion 38A of the body 38 has a disk shape with a diameter greater than the inner diameter of the inner cylindrical face 70 of the fastening ring 68, such that a lower face 73 of the fastening ring 68 axially abuts the periphery of an upper face 74 of the lower portion 38A.

The upper portion 38B of the body 38 also has a disk shape of diameter substantially equal to the inner diameter of the inner cylindrical face 70 of the fastening ring 68 so that the fastening ring 68 is received around the upper portion 38B with sufficient radial clearance to allow pivoting of the fastening ring 68.

The inner annular flange 72 of the fastening ring 68 is received in a complementary housing 76 defined vertically between the lower portion 38A and the upper portion 38B. The recess 76 is here defined between the upper face 74 of the lower portion 38A and an external flange 78 extending from a rim of the upper portion 38B. The inner annular flange 72 is thus received in its housing 76 with sufficient clearance to allow pivoting of the fastening ring 68 relative to the body 38, the fastening ring 68 being locked vertically in both directions relative to the body 38 by the upper face 72 of the lower part 38A on the one hand, and by the external flange 78 of the upper part 38B on the other hand.

The lower part 38A and the upper part 38B are fixed together, after mounting the fastening ring 68, for example by means of screws 80.

To improve pivotal guidance of the fastening ring 68 relative to the body 38, the fastening ring 68 here includes a skirt 79 that extends vertically downward from the periphery of its lower face 73. The skirt 79 accommodates the lower portion 38A of the body 38 with a radial clearance allowing the fastening ring 68 to pivot.

Pivoting of the fastening ring 68 relative to the body 38 is limited in both directions between the angular mounting position and the angular removal position. To this end, the adapter 29 includes stop faces 82A, 82B that cooperate with an indexing element.

The stop faces 82A, 82B are here carried by the fastening ring 68. They are formed by the ends of a groove 82 in the form of an arc of a circle centered on the axis "A" which is made in an annular lower face 73 of the fastening ring 68. A pin 84 extending vertically from the upper face 74 of the lower body portion 38A is received in the groove 82. The pin 84 forms the indexing element that allows limited pivoting in both directions of the fastening ring 68 relative to the body 38 between its angular mounting position and its angular removal position.

In a variant not shown, the pin is carried by the fastening ring and the groove is made in the adapter body.

The inner cylindrical face 70 of the fastening ring 68 has grooves 86, each of which is intended to cooperate with an associated lug 50 of the mold bottom 16 for fastening the mold bottom 16. Each groove 86 has an upper opening 88 which opens into an upper face of the fastening ring 68 to allow insertion of the lugs 50 by their free lower end 52.

Each groove 86 here has a closed lower end 90 against which the associated lug 50 is intended to abut in the mounted position of the mold bottom 16.

Each groove 86 here has a helical shape complementary to the helical shape of the lugs 50 to allow for the screwing movement to secure the mold bottom 16.

Alternatively, not shown, the grooves have an L-shaped profile to allow bayonet mounting of the mold bottom.

When the mold bottom 16 is in the mounted position, the fastening ring 68 is locked in its angular mounting position by friction with the lugs 50.

To ensure that the fastening ring 68 remains in its angled mounting position during use of the mold bottom 16, the second fastening means 28B of the adapter 29 here includes a member 92 for locking the fastening ring 68 in the mounted position.

In the example shown in Figure 4, the locking member 92 is formed by a screw or pin that passes radially through an opening in the skirt 79 of the fastening ring 68 and is driven into a complementary bore in the body 38.

Alternatively, the screw or the pin are replaced by a plunger mounted to slide radially in the body between a retracted position allowing rotation of the fastening ring 68 and an extended position in the opening of the skirt 79 towards which it is elastically biased.

If a vertical force is applied to pull the mold bottom 16 out of the mold support 24, the locking member 92 is not stressed. The force is directly passed to the fastening ring 68 through the lugs 50.

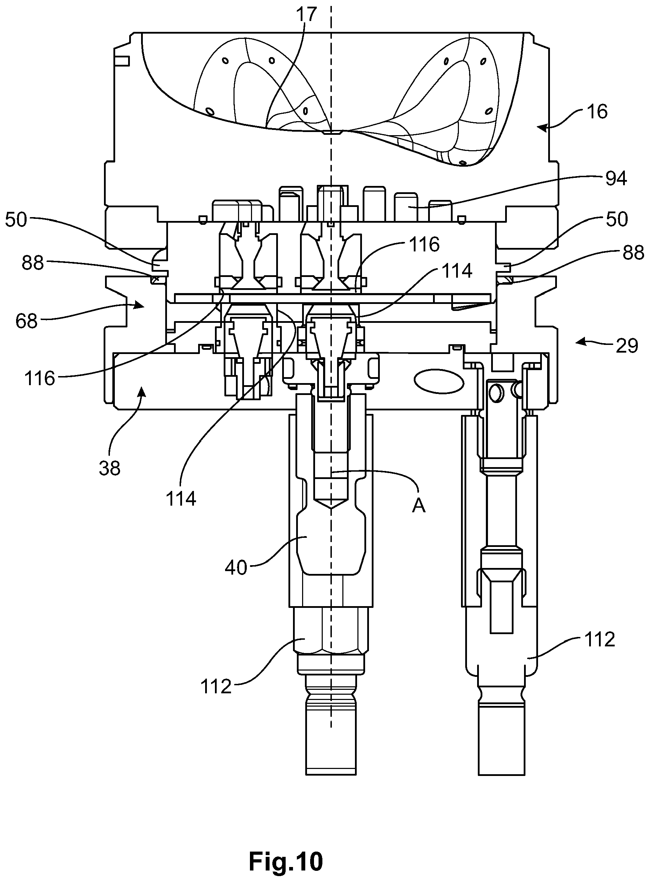

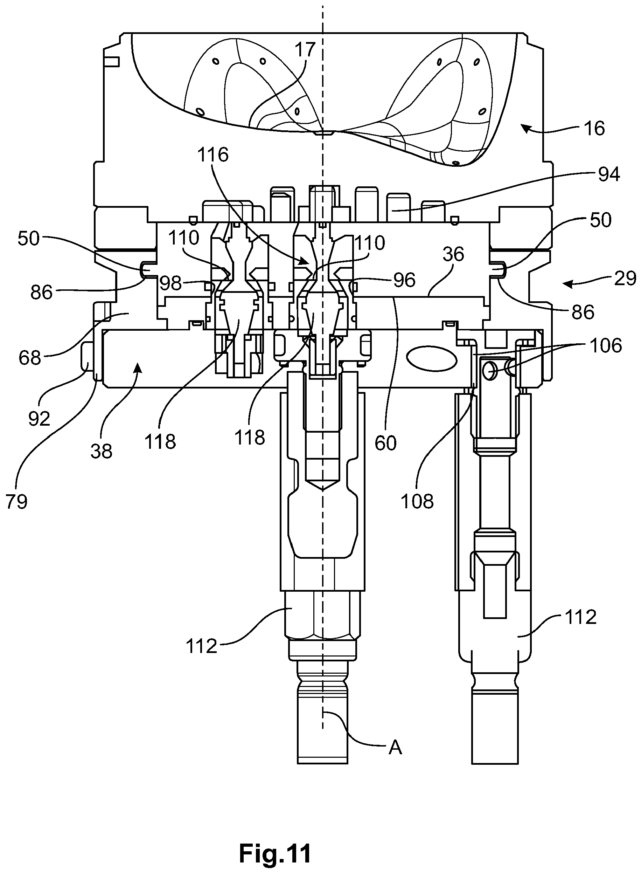

Furthermore, the mold bottom 16 is here equipped with at least one tempering duct 94, as illustrated in Figures 10 and 11 or as shown very schematically in Figure 3. A heat transfer fluid is intended to flow through this tempering duct 94 to heat and/or cool the mold bottom 16 in order to maintain the temperature of the cavity 17 within an operating range that allows for efficient container molding.

The tempering duct 94 comprises here a first connection port 96 and a second connection port 98 which each open into the lower face 60 of the mold bottom 16. One of the connection ports 96, 98 is intended to form a heat transfer fluid supply orifice, here the first connection port 96, while the other of the connection ports 96, 98 is intended to form a heat transfer fluid outlet orifice, here the second connection port 98. The first connection port 96 is here coaxial with the axis "A" while the second connection port 98 is eccentric with respect to the axis "A".

The mold support 24 includes at least one heat transfer fluid supply line 100 and a heat transfer fluid return line 102.

To allow the supply of heat transfer fluid to the mold bottom 16, the adapter 29 includes at least one fluid duct. Here, the adapter 29 includes a first fluidic duct 104 to be connected to the supply line 100 and a second fluidic duct 106 to be connected to the return line 102.

Each fluidic duct 104, 106 of the adapter 29 includes at least one lower end port 108 that is adapted to be connected with an associated line 100, 102 of the mold support 24, and at least one upper end port 110 that is adapted to be connected with a connection port 96, 98 of the tempering duct 94 of the mold bottom 16.

Here, the lower end ports 108 open into the bearing face 36 of the body 38 of the adapter 29, while the upper end ports 110 open into the upper carrier face 64 of the body 38.

Each fluidic duct 106, 104 of the adapter 29 is equipped with a first connector 112 that is arranged at the lower end port 108 of the associated fluidic duct 104, 106 and is intended to be sealingly connected with a complementary connector of the mold support 24.

According to a first embodiment of the adapter 29 shown in Figure 4, the adapter 29 includes two first connectors 112 that project vertically below the body 38 of the adapter 29.

In an alternative embodiment shown in Figure 5, each fluidic duct 104, 106 of the adapter 29 has two lower end ports 108 that communicate with a common upper end port 110. The adapter 29 then includes four first connectors 112 that project vertically below the body 38 of the adapter 29.

Each first connector 112 is configured to be automatically connected with the complementary connector of the mold support 24 by vertical interlocking. Thus, the connection of the conduits 100, 102 of the mold support 24 with the fluidic duct 104, 106 of the adapter 29 is achieved simultaneously with the mounting of the adapter 29 on the mold support 24 by fitting the stud 40 into the fastening hole 32.

Each fluidic duct 104, 106 of the adapter 29 further includes a second connector 114 that is arranged at the upper end port 110 and is intended to be sealingly connected with a complementary connector 116 of the mold bottom 16 arranged at the ports 96, 98 of the tempering duct 94.

Each second connector 114 is in the form of a sleeve that projects vertically above the level of the upper carrier face 64 of the body 38. The sleeve contains a valve 118 vertically slidable between an upper position closing the upper end port 110, toward which it is biased, and a lower position opening the upper end port 110.

Each connector 116 of the mold bottom 16 is formed by a housing of complementary shape to the sleeve forming the second connector 114. The housing forming the connector 116 is provided with a pin 120 which is intended to press the valve 118 to slide it to its open position when the mold bottom 16 is mounted on the adapter 29, as shown in Figure 11. Thus, the second connector 114 is configured to automatically connect with the complementary mold bottom connector by vertical interlocking upon vertical sliding movement of the mold bottom 16 relative to the body 38.

The operation of mounting the mold bottom 16 on the mold support 24 by means of the adapter 29 is now described.

In a first step, the adapter 29 is mounted on the mold support 24. For this purpose, the adapter 29 is arranged above the mold support 24, with the stud 40 in line with the fastening hole 32. The adapter 29 is angularly oriented about the "A" axis so that the first connectors 112 are in line with the complementary connectors of the mold support 24. Adapter 29 is then translated vertically toward mold support 24 so that stud 40 is inserted into fastening hole 32 until locking elements 34 are in the locking position. During this translational movement, the first connectors 112 are connected to the complementary connectors on the mold support 24.

The adapter 29 is thus mounted and attached to the mold support 24.

As shown in Figure 10, the mold bottom 16 is then arranged over the adapter 29. The fastening ring 68 is rotated into its angular removal position. The mold bottom 16 is oriented about the axis "A" so that the connectors 116 on the mold bottom 16 are in line with the second connectors 114 on the adapter 29. In this position, the free lower end 52 of the lugs 50 are arranged in line with the upper openings 88 of the grooves 86 of the fastening ring 68.

The mold bottom 16 is slid vertically downward until the lugs 50 are engaged in their respective grooves 86.

The fastening ring 68 is then rotated to its mounting angular position while keeping the mold bottom 16 pivotally fixed with respect to the body 38, driving the lugs 50 downwardly which causes the mold bottom 16 to slide downwardly until the lower face 60 of the mold bottom 16 abuts the upper carrier face 64 of the body 38 of the adapter 29, as shown in Figure 11. The mold bottom 16 is then in the mounted position.

During this vertical translational movement of the mold bottom 16 relative to the adapter body 38, the connectors 116 of the mold bottom 16 are connected to the second connectors 114 of the adapter 29.

The fastening ring 68 is then locked in its angular mounting position by inserting the locking member 92 into the skirt hole 79.

The dismantling of the mold bottom 16 is done by reversely carrying out these operations.

Advantageously, the adapter 29 according to the teachings of the invention enables a mold bottom 16 to be easily and quickly mounted on a mold support 24 that includes fastening means that are not complementary to the fastening means for the mold bottom 16.

## Claims

1. Means for mounting a mold bottom (16) used for forming a container of thermoplastic material, in particular by stretch blow molding-, from a preform, on a mold support (24) of a molding unit (10), the mold bottom (16) being located at a lower vertical end of a mold (12)
**characterized in that** the mounting means comprise an adapter (29) to be axially interposed between the mold support (24) below and the mold bottom (16) above, the adapter (29) comprising:
- first fastening means (26B) for quick release attachment of the adapter to the mold support (24); and
- second fastening means (28B) for the quick-release attachment of the mold bottom (16) to the adapter (29).

2. Mounting means according to the preceding claim, **characterized in that** the first fastening means (26B) of the adapter (29) are not complementary to the second fastening means (28B) of the adapter (29).

3. Mounting means according to any one of the preceding claims, **characterized in that** the first fastening means (26B) are axial interlocking fastening means performed solely by an axial sliding movement of the adapter (29) relative to the mold support (24).

4. Mounting means according to the preceding claim, **characterized in that** the first fastening means (26B) comprises at least one stud (40) extending axially downwardly from a body (38) of the adapter (29) and intended to be axially engaged in a complementary hole (32) of the mold support (24), the stud (40) comprising at least one recess (42) for radially receiving a locking element (34) in a mounted position on the mold support (24).

5. Mounting means according to any one of the preceding claims, **characterized in that** the second fastening means (28B) are means for fastening by a combination of a pivoting movement of the second fastening means (28B) relative to the mold bottom (16) and an axial sliding movement of the mold bottom (16) relative to the adapter (29).

6. Mounting means according to the preceding claim, **characterized in that** the second fastening means (28B) comprise a fastening ring (68), the fastening ring (68) being pivotally mounted on a body (38) of the adapter (29) between an angular position for mounting the mold bottom (16) and an angular position for dismounting the mold bottom (16), the fastening ring (68) being mounted axially stationary relative to the body (38) of the adapter (29).

7. Mounting means according to any one of claims 5 or 6, **characterized in that** the second fastening means (28B) comprise grooves (86) intended to cooperate with complementary lugs (50) of the mold bottom (16) for fastening the mold bottom (16) according to a pivoting movement of the mold bottom (16) relative to the second fastening means (28B).

8. Mounting means according to any one of claims 5 or 6, **characterized in that** the adapter (29) comprises stop faces (82A, 82B) intended to limit the pivoting of the fastening ring (68) between its angular mounting position and its angular removal position.

9. Mounting means according to any one of claims 7 or 8, **characterized in that** the second fixing means (28B) comprise a member (92) for locking the fastening ring (68) in the angular mounting position.

10. Mounting means according to any one of the preceding claims, **characterized in that** the adapter (29) comprises at least one fluidic duct (104, 106) comprising at least one lower end port (108) which is intended to be connected with a line (100, 102) of the mold support (24), and an upper end port (110) which is intended to be connected with a tempering duct (94) of the mold bottom (16).

11. Mounting means according to the preceding claim, **characterized in that** the adapter (29) comprises at least a first connector (112) which is arranged at the lower end of the fluidic duct (104, 106) and which is intended to be sealingly connected with a complementary connector of the mold support (24).

12. Mounting means according to the preceding claim, taken in combination with claim 3, **characterized in that** the first connector (112) is configured to automatically connect with the complementary connector of the mold support (24) by vertical mating.

13. The mounting means according to any one of claims 8 to 10, **characterized in that** the adapter (29) comprises a second connector (114) which is arranged at the upper end port (110) of the fluidic duct (104, 106) and which is intended to be sealingly connected with a complementary connector (116) of the mold bottom (16).

14. Mounting means according to the preceding claim, taken in combination with claim 7, **characterized in that** the second connector (114) is configured to automatically connect with the complementary connector (116) of the mold bottom (16) by vertical mating.

15. Moulding unit (10) for the biaxial forming of a container from a preform of thermoplastic material, in particular by stretch blow molding, the molding unit (10) comprising:
- a multi-part mold (12) with a mold bottom (16), one upper side of which is provided with a cavity (17) in the shape of the container base;
- a mold support (24) on which the mold bottom (16) is fixedly mounted;
- the mold bottom (16) having second fastening means (28A) for attachment to the mold support (24);
- the mold support (24) comprising first fastening means (26A) for fixing the mold bottom (16) which are not complementary to the second fixing means (28A) of the mold bottom (16);
**characterized in that** the molding unit (10) comprises an adapter (29) made according to any one of claims 2 to 14 which is interposed between the mold bottom (16) and the mold support (24) to allow the mold bottom (16) to be fixed to the mold support (24), the first fastening means (26B) of the adapter (29) being complementary to the first fastening means (26A) of the mold support (24) and the second fastening means (28B) of the adapter (29) being complementary to the second fastening means (28A) of the mold bottom (16).
